# EUROPÄISCHE PATENTSCHRIFT

(11) **EP 3 826 873 B1**
(45) Veröffentlichungstag und Bekanntmachung des Hinweises auf die Patenterteilung: **07.09.2022**
(21) Anmeldenummer: 19752420.0
(22) Anmeldetag: 09.07.2019
(51) Int. Cl.: B60K 6/40, F16D 25/0638

(54) **HYBRIDMODUL MIT EINGANGSWELLE MIT DREHDURCHFÜHRUNG SOWIE BETÄTIGUNGSEINRICHTUNG FÜR EINE VON MEHREREN KUPPLUNGEN; SOWIE ANTRIEBSSTRANG**
HYBRID MODULE COMPRISING A INPUT SHAFT HAVING A ROTARY UNION, AND ACTUATION UNIT FOR ONE OF MULTIPLE CLUTCHES, AND DRIVE TRAIN
MODULE HYBRIDE DOTÉ D'UN ARBRE D'ENTRÉE À PASSAGE TOURNANT ET DISPOSITIF D'ACTIONNEMENT POUR UN EMBRAYAGE PARMI PLUSIEURS EMBRAYAGES ET CHAÎNE CINÉMATIQUE

(30) Priorität: 23.07.2018 DE 102018117760; 14.12.2018 DE 102018132262
(43) Veröffentlichungstag der Anmeldung: 02.06.2021
(73) Patentinhaber: Schaeffler Technologies AG & Co. KG, 91074 Herzogenaurach (DE)
(72) Erfinder: NEUKUM, Reiner, 77654 Offenburg (DE)
(86) Internationale Anmeldenummer: PCT/DE2019/100643
(87) Internationale Veröffentlichungsnummer: WO 2020/020409

(56) Entgegenhaltungen:
- WO-A1-2017/186227
- US-A1- 2011 121 692

## Beschreibung

Die Erfindung betrifft ein Hybridmodul für einen (hybriden) Antriebsstrang eines Kraftfahrzeuges, wie ein Pkw, Lkw, Bus oder sonstiges Nutzfahrzeug, mit einem Gehäuse, einer in dem Gehäuse aufgenommenen elektrischen Maschine, einer Eingangswelle, einem mit einem Rotor der elektrischen Maschine drehgekoppelten Träger, einer zwischen der Eingangswelle und dem Träger wirkend eingesetzten Trennkupplung, wobei die Trennkupplung mit mehreren Reibelementen radial innerhalb eines mit dem Rotor gekoppelten hülsenförmigen Drehmomentübertragungsbereiches des Trägers angeordnet ist, einer zum Ein- und Ausrücken der Trennkupplung vorgesehenen hydraulischen Betätigungseinrichtung sowie zwei Teilkupplungen, welche Teilkupplungen jeweils mehrere radial innerhalb des Drehmomentübertragungsbereiches des Trägers angeordnete Reibelemente aufweisen und mit ihrem ersten Kupplungsbestandteil mit dem Träger drehfest verbunden sind. Zudem betrifft die Erfindung einen Antriebsstrang mit diesem Hybridmodul.

Aus dem Stand der Technik sind bereits verschiedene Ausführungen von Hybridmodulen bekannt. Eine beispielhafte gattungsgemäße Ausführung ist mit der DE 10 2009 059 944 A1 offenbart. Des Weiteren ist Stand der Technik aus der DE 10 2007 008 946 A1, WO 2017/186227 A1 und US 2011/121692 A1 bekannt.

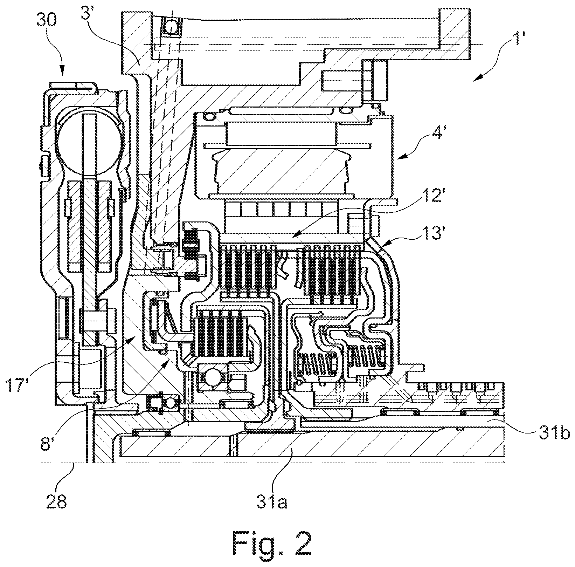

Auch ist der Anmelderin Stand der Technik bekannt, der in Fig. 2 dargestellt ist. Das in dieser Figur zu erkennende Hybridmodul 1' weist eine elektrische Maschine 4' und verschiedenen Trenn- und Teilkupplungen 8', 12', 13' auf. Eine Betätigung der Trennkupplung 8' erfolgt über einen in einem Gehäuse 3' des Hybridmoduls 1' aufgenommenen Druckzylinder 17'.

Die aus dem Stand der Technik bekannten Ausführungen haben jedoch den Nachteil, dass die die Trennkupplung verstellende Betätigungseinrichtung relativ großbauend umgesetzt ist. Auch ist der Herstell- und Montageaufwand dieser Betätigungseinrichtung sowie der Trennkupplung relativ aufwändig. Es kann gegebenenfalls die Funktionalität bzw. die Lebensdauer des Hybridmoduls nachteilig beeinflusst werden.

Es ist daher die Aufgabe der vorliegenden Erfindung, die aus dem Stand der Technik bekannten Nachteile zu beheben und ein Hybridmodul für einen Antriebsstrang zur Verfügung zu stellen, das eine kompakte Bauweise aufweist und mit einem niedrigen Herstell- und Montageaufwand herstellbar ist, wobei auch eine sichere Funktionalität mit einer hohen Lebensdauer gewährleistet ist.

Dies wird erfindungsgemäß dadurch gelöst, dass die Betätigungseinrichtung einen Hydraulikleitkanal aufweist, welcher Hydraulikleitkanal mit einem innerhalb des Gehäuses auf der Eingangswelle aufgenommenen Betätigungskolben hydraulisch gekoppelt ist und zumindest teilweise unter Ausbildung einer Drehdurchführung in die Eingangswelle eingebracht ist.

Aufgrund der Integration des Hydraulikleitkanals in die Eingangswelle wird eine besonders kompakte sowie einfach aufgebaute Betätigungseinrichtung für die Trennkupplung gewährleistet. Zusammen mit der Anordnung der beiden Teilkupplungen sowie der Trennkupplung radial innerhalb des Drehmomentübertragungsbereiches wird eine besonders kompakte radiale Anordnung umgesetzt.

Weitere vorteilhafte Ausführungen sind in den Unteransprüchen beansprucht und nachfolgend näher erläutert.

Demnach ist es auch von Vorteil, wenn der Hydraulikleitkanal sowie der Betätigungskolben einem mit der Trennkupplung zusammenwirkenden konzentrischen Betätigungszylinder (der Betätigungseinrichtung) zugeordnet sind. Dadurch ist eine kompakte Betätigungseinrichtung realisiert.

In diesem Zusammenhang ist es weiterhin vorteilhaft, die beiden Teilkupplungen durch eine gemeinsame, vorzugsweise ebenfalls hydraulisch umgesetzte (zweite) Betätigungseinrichtung zu betätigen, wobei diese (zweite) Betätigungseinrichtung zumindest größtenteils auf einer der Trennkupplung axial abgewandten Seite der Teilkupplungen angeordnet ist.

Ist der Hydraulikleitkanal in einem ersten Abschnitt durch zumindest ein in die Eingangswelle eingebrachtes Loch (vorzugsweise Sackloch und/oder Bohrloch) gebildet, ist der Hydraulikleitkanal innerhalb der Eingangswelle besonders einfach herstellbar.

In diesem Zusammenhang ist es des Weiteren zweckmäßig, wenn der erste Abschnitt ein in radialer Richtung verlaufendes erstes Loch (vorzugsweise Sackloch) sowie ein an das erste Loch (vorzugsweise unmittelbar, weiter bevorzugt mittelbar) anschließendes, in einem spitzen Winkel zu dem ersten Loch ausgerichtetes, zweites Loch (vorzugsweise Sackloch) aufweist. Dadurch ergibt sich eine besonders geschickte radiale und axiale Umlenkung des Hydraulikmittels im Betrieb zu dem Betätigungskolben hin. Das zweite Loch schließt somit in einer bevorzugten Ausführung unmittelbar an das erste Loch an.

In diesem Zusammenhang ist es auch vorteilhaft, wenn mehr als zwei Löcher den ersten Abschnitt ausbilden. Als besonders zweckmäßig hat es sich herausgestellt, das erste Loch (vorzugsweise Sackloch) mittelbar über ein weiteres (drittes) Loch, das sich vorzugsweise axial erstreckt, mit dem zweiten Loch (vorzugsweise Sackloch) mittelbar zu verbinden. Das dritte Loch ist dann weiter bevorzugt als Sackloch oder Durchgangsloch in die Eingangswelle eingebracht und zu seinem Ende / zu seinen beiden Enden hin, vorzugsweise über einen Königsexpander oder eine Kugel, verschlossen.

Des Weiteren ist es von Vorteil, wenn der Hydraulikleitkanal einen zweiten Abschnitt aufweist, welcher zweite Abschnitt in einem mit dem Gehäuse verbundenen oder unmittelbar durch das Gehäuse ausgebildeten Wandbereich eingebracht ist. Der zweite Abschnitt erstreckt sich im Wesentlichen in radialer Richtung.

Die beiden Abschnitte des Hydraulikleitkanals sind des Weiteren vorzugsweise über einen radialen Spalt, der axial versetzt zu einem die Eingangswelle relativ zu dem Gehäuse verdrehbar lagernden Lager umgesetzt ist, miteinander verbunden. Dadurch ist eine besonders geschickte Drehdurchführung realisiert. Der Hydraulikleitkanal bildet vorzugsweise in diesem Spalt einen seitens der Eingangswelle vollständig umlaufenden Kanal in Form einer Ringnut aus.

Der Hydraulikleitkanal mündet vorzugsweise in einem zwischen dem Betätigungskolben und einem axial fest abgestützten Druckgehäusebereich ausgebildeten Druckraum der Betätigungseinrichtung ein. Dadurch ist eine direkte Kopplung des Hydraulikleitkanals mit dem Betätigungskolben realisiert.

Hinsichtlich der Trennkupplung und/oder der ersten Teilkupplung und/oder der zweiten Teilkupplung ist es von Vorteil, wenn diese jeweils mit ihren Reibelementen zumindest teilweise in axialer Richtung überlappend zu dem Drehmomentübertragungsbereich des Trägers angeordnet sind. Dadurch wird auch eine axial besonders kompakte Anordnung verwirklicht.

Des Weiteren betrifft die Erfindung einen Antriebsstrang für ein Kraftfahrzeug, mit dem erfindungsgemäßen Hybridmodul nach zumindest einer der zuvor beschriebenen Ausführungen.

In anderen Worten ausgedrückt, ist somit erfindungsgemäß eine Antriebswelle (Eingangswelle) mit einer Drehdurchführung und ein Betätigungssystem (mit Betätigungseinrichtung) für eine Dreifachkupplung realisiert. Das Hybridmodul umfasst eine Dreifachkupplung (bestehend aus Trennkupplung und den beiden Teilkupplungen). Die Dreifachkupplung weist die Trennkupplung zum Verbinden / Abtrennen einer Verbrennungskraftmaschine mit / von einem Antriebsstrang sowie eine Doppelkupplung mit einer ersten Teilkupplung und einer zweiten Teilkupplung auf. Die Doppelkupplung dient zum Verbinden / Abtrennen des Hybridmoduls mit / von einem Getriebe, das entlang des Drehmomentübertragungsflusses betrachtet flussabwärts relativ zu dem Hybridmodul angeordnet ist. Erfindungsgemäß wird die Trennkupplung unter Verwendung einer Drehdurchführung, die die Eingangswelle des Hybridmoduls durchdringt, betätigt.

Die Erfindung wird nun nachfolgend anhand einer Figur näher erläutert.

Es zeigen:
- Fig. 1: eine Längsschnittdarstellung eines zum Teil veranschaulichten erfindungsgemäßen Hybridmoduls nach einem bevorzugten Ausführungsbeispiel, wobei insbesondere ein Bereich einer Betätigungseinrichtung sowie einer durch diese Betätigungseinrichtung betätigten Trennkupplung sowie deren Hydraulikleitkanal in einem Gehäuse und einer Eingangswelle des Hybridmoduls zu erkennen sind, sowie
- Fig. 2: eine Längsschnittdarstellung eines aus dem Stand der Technik bekannten Hybridmoduls.

Die Figuren sind lediglich schematischer Natur und dienen ausschließlich dem Verständnis der Erfindung.

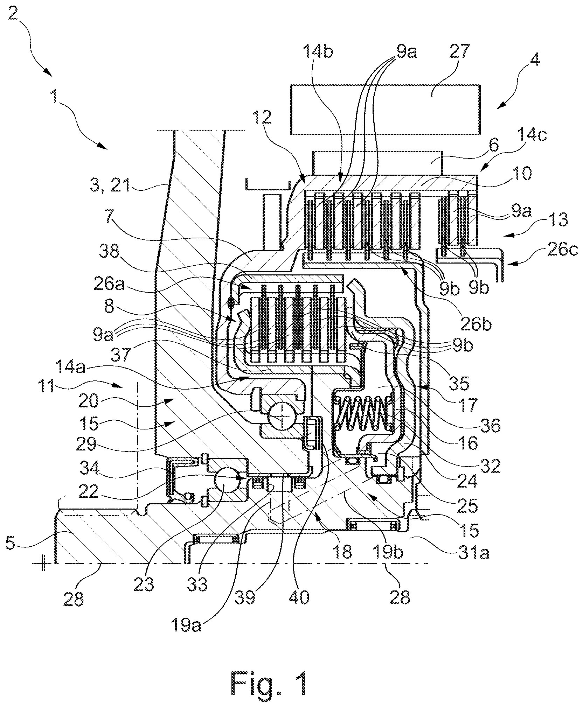

Mit Fig. 1 ist ein erfindungsgemäßes Hybridmodul 1 nach einem bevorzugten Ausführungsbeispiel veranschaulicht. Ein gesamtheitliches Hybridmodul 1', wie es aus dem Stand der Technik bereits bekannt ist und hinsichtlich seines prinzipiellen Aufbaus dem Hybridmodul 1 der Fig. 1 entspricht, ist in Fig. 2 zu erkennen. Insbesondere sei darauf hingewiesen, dass die in Fig. 1 nicht näher dargestellten Details hinsichtlich der beiden Teilkupplungen 12, 13 sowie deren Betätigungen aus Fig. 2 beispielhaft für das Ausführungsbeispiel nach Fig. 1 hervorgehen.

Demnach weist das erfindungsgemäße Hybridmodul 1 ein Gehäuse 3 auf, innerhalb dessen eine elektrische Maschine 4 angeordnet ist. Die elektrische Maschine 4 des Hybridmoduls 1 weist einen fest mit dem Gehäuse 3 verbundenen Stator 27 sowie einen relativ zu dem Stator 27 verdrehbaren Rotor 6 auf. In dieser Ausführung ist die elektrische Maschine 4 mit ihrer Rotordrehachse koaxial zu einer zentralen Drehachse 28 des Hybridmoduls 1 angeordnet, kann prinzipiell jedoch in weiteren Ausführungen auch achsparallel, d. h. mit der Rotordrehachse parallel zu der Drehachse 28 angeordnet sein. Der Rotor 6 ist stets mit einem hülsenförmigen Drehmomentübertragungsbereich 10 eines (Rotor-) Trägers 7 gekoppelt. In dieser Ausführung dient der Drehmomentübertragungsbereich 10 unmittelbar zur Aufnahme des Rotors 6. Der Rotor 6 ist auf einer radialen Außenseite des Drehmomentübertragungsbereiches 10 angeordnet. Der Träger 7 dient damit unmittelbar zur Aufnahme des Rotors 6 sowie zu dessen Lagerung relativ zu dem Gehäuse 3 über ein Hauptlager 29.

Des Weiteren weist das Hybridmodul 1 eine relativ zu dem Gehäuse 3 verdrehbare Eingangswelle 5 auf. Die Eingangswelle 5 ist über ein Lager 23, hier in Form eines Wälzlagers, nämlich eines Kugellagers, umgesetzt, relativ zu dem Gehäuse 3 verdrehbar gelagert. Die Eingangswelle 5 durchdringt eine zentrale Öffnung des Gehäuses 3 und ragt somit von einer Umgebung des Gehäuses 3 in dieses hinein. Auf typische Weise ist die Eingangswelle 5 im Betrieb mit einer hier der Übersichtlichkeit halber nicht weiter dargestellten Verbrennungskraftmaschine mittelbar oder unmittelbar drehgekoppelt. Weiter bevorzugt ist wiederum ein Drehschwingungsdämpfer 30 in Form eines Zweimassenschwungrades mit der Eingangswelle 5 gekoppelt und selbst weiter mit einer Ausgangswelle der Verbrennungskraftmaschine gekoppelt.

Zur wahlweisen Drehverbindung bzw. Abkopplung der Eingangswelle 5 relativ zu dem Träger 7 ist eine Trennkupplung 8 in Form einer Reiblamellenkupplung realisiert. Die Trennkupplung 8 weist zwei Kupplungsbestandteile 14a, 26a auf, wobei ihr erster Kupplungsbestandteil 14a drehfest mit der Eingangswelle 5 verbunden ist und ihr zweiter Kupplungsbestandteil 26a drehfest mit dem Träger 7 verbunden ist. Auf typische Weise weist die Trennkupplung 8 mehrere sich in axialer Richtung abwechselnde, miteinander zusammenwirkende Reibelemente 9a, 9b auf, die entweder Teil des ersten Kupplungsbestandteils 14a oder des zweiten Kupplungsbestandteils 26a sind. Wie in Fig. 1 gut zu erkennen, ist die Trennkupplung 8 mit ihren Reibelementen 9a, 9b radial innerhalb des Drehmomentübertragungsbereiches 10 sowie in axialer Richtung zumindest teilweise auf gleicher Höhe mit dem Drehmomentübertragungsbereich 10 angeordnet.

Radial außerhalb der Reibelemente 9a, 9b der Trennkupplung 8 sind mehrere Reibelemente 9a, 9b zweier Teilkupplungen 12, 13 angeordnet. Auch die jeweilige Teilkupplung 12, 13 ist als Reiblamellenkupplung ausgebildet und ähnlich wie die Trennkupplung 8 aufgebaut. Die beiden Teilkupplungen 12, 13 bilden zusammen eine Doppelkupplung, die im Drehmomentübertragungsfluss gesehen zwischen dem Träger 7 und zwei Getriebeeingangswellen 31a, 31b eines hier der Übersichtlichkeit halber nicht weiter dargestellten Getriebes angeordnet sind. Eine erste Teilkupplung 12 ist zwischen dem Träger 7 und einer ersten Getriebeeingangswelle 31a eingesetzt und eine zweite Teilkupplung 13 ist zwischen dem Träger 7 und einer zweiten Getriebeeingangswelle 31b (Fig. 2) wirkend eingesetzt. Ein erster Kupplungsbestandteil 14b, 14c der jeweiligen Teilkupplung 12, 13 ist somit samt mehrerer erster Reibelemente 9a drehfest mit dem Träger 7 verbunden; ein zweiter Kupplungsbestandteil 26b, 26c der jeweiligen Teilkupplung 12, 13 ist samt mehrerer zweiter Reibelemente 9b drehfest mit der jeweiligen Getriebeeingangswelle 31a, 31b gekoppelt. Die Teilkupplungen 12, 13 sind in Bezug auf die Drehachse 28 gesehen radial außerhalb der Reibelemente 9a, 9b der Trennkupplung 8 sowie relativ zueinander axial versetzt angeordnet. Auch sind die Reibelemente 9a, 9b der beiden Teilkupplungen 12, 13 wiederum in axialer Richtung auf gleicher Höhe mit dem Drehmomentübertragungsbereich 10 bzw. radial innerhalb dieses Drehmomentübertragungsbereiches 10 angeordnet.

Zur Betätigung der Trennkupplung 8 ist erfindungsgemäß nach Fig. 1 der spezielle Aufbau der Betätigungseinrichtung 11 vorgesehen. Die Betätigungseinrichtung 11 ist als eine hydraulische Betätigungseinrichtung 11 realisiert. Die Betätigungseinrichtung 11 weist einen Betätigungszylinder 17 auf, der als konzentrischer Kupplungsnehmerzylinder realisiert ist. Der Betätigungszylinder 17 weist weiter einen axial fest an der Eingangswelle 5 angebrachten Druckgehäusebereich 24 auf. In diesem Druckgehäusebereich 24 ist ein in axialer Richtung der Drehachse 28 relativ zu dem Druckgehäusebereich 24 verschiebbarer Betätigungskolben 16 aufgenommen. Der Betätigungskolben 16 bildet mit dem Druckgehäusebereich 24 einen hydraulischen Druckraum 25 aus, der über einen Hydraulikleitkanal 15 im Betrieb mit einem Hydraulikmittel druckbeaufschlagbar ist. In Abhängigkeit des Drucks innerhalb des Druckraums 25 wird der Betätigungskolben 16 in axialer Richtung verschoben und bringt im druckbeaufschlagten Zustand auf die Reibelemente 9a, 9b der Trennkupplung 8 eine einen Reibkraftschluss erzeugende Anpresskraft auf. Auch ist in dieser Ausführung eine prinzipiell optionale Fliehölkammer 36 auf einer dem Druckraum 25 axial abgewandten Seite des Betätigungskolbens 16 wirkend eingesetzt. Der Betätigungskolben 16 bildet in diesem Ausführungsbeispiel unmittelbar einen auf ein endseitig angeordnetes Reibelement (hier ein erstes Reibelement 9a) einwirkenden Stützbereich 35 aus. Auch ist eine Rückstellfeder 32 in dem Betätigungszylinder 17 vorhanden, die derart eingespannt ist, dass sie den Betätigungskolben 16 in eine der ausgerückten Stellung der Trennkupplung 8 entsprechende Stellung hin vorspannt.

Erfindungsgemäß ist der Hydraulikleitkanal 15, der in den Druckraum 25 mündet und somit auf den Betätigungskolben 16 einwirkt, zu einem Teil unmittelbar in der Eingangswelle 5 integriert / angebracht. Der Hydraulikleitkanal 15 weist in diesem Zusammenhang einen ersten Abschnitt 18 auf, wobei dieser erste Abschnitt 18 ein erstes Sackloch 19a sowie ein zweites Sackloch 19b aufweist. Das erste Sackloch 19a erstreckt sich in radialer Richtung von einer radialen Außenseite der Eingangswelle 5 aus in die Eingangswelle 5 hinein. An einem radial innenliegenden Ende des ersten Sacklockes 19a schließt ein zweites Sackloch 19b an, das in einem spitzen Winkel relativ zu dem ersten Sackloch 19a angestellt ist. Das zweite Sackloch 19b bildet somit jenen Bereich des ersten Abschnittes 18 / des Hydraulikleitkanals 15, der unmittelbar in den Druckraum 25 einmündet. Das zweite Sackloch 19b erstreckt sich relativ zu dem ersten Sackloch 19a von der der Verbrennungskraftmaschine zugewandten Seite weg. Des Weiteren ist zu erkennen, dass das erste Sackloch 19a sich ausgehend von einem radialen Spalt 22 zwischen dem Gehäuse 3 und der Eingangswelle 5 in die Eingangswelle 5 hinein erstreckt. Dieser Spalt 22 ist einerseits durch eine Ringnut 33, die radial von außen unmittelbar in die Eingangswelle 5 eingebracht ist, gebildet. Hinsichtlich der Position des Spaltes 22 sei auch angemerkt, dass dieser axial versetzt zu dem Lager 23 angeordnet ist. Auf einer dem Spalt 22 axial abgewandten Seite des Lagers 23 ist ein Dichtring 34 angeordnet, welcher Dichtring 34 die Eingangswelle 5 und das Gehäuse 3 relativ zueinander abdichtet.

Gemäß weiteren Ausführungen ist es prinzipiell auch möglich, mehr als zwei Löcher 19a, 19b in den ersten Abschnitt 18 zu integrieren. Insbesondere ist es in einer weiter bevorzugten Ausführung zweckmäßig, ein sich axial in der Eingangswelle 5 erstreckende, drittes Loch (etwa ein Sackloch oder ein Durchgangsloch) vorzusehen, das die beiden ersten und zweiten Löcher 19a, 19b miteinander verbindet und weiter bevorzugt zu seinem zumindest einen Ende mit einem Schließkörper, wie einer Kugel oder einem Königsexpander, verschlossen ist.

Der radiale Spalt 22 geht radial außerhalb der Eingangswelle 5 unmittelbar in einen weiteren zweiten Abschnitt 20 des Hydraulikleitkanals 15 über. Der zweite Abschnitt 20 erstreckt sich von dem radialen Spalt 22 aus weiter in radialer Richtung nach außen. Der zweite Abschnitt 20 ist in einem Wandbereich 21 des Gehäuses 3 unmittelbar eingebracht. Auch dieser zweite Abschnitt 20 besteht vorzugsweise aus mehreren miteinander verbundenen Sacklöchern. Der Wandbereich 21 ist unmittelbar Bestandteil des Gehäuses 3. Das Gehäuse 3 ist demnach als Ganzes aus einem AluminiumWerkstoff / einer Aluminium-Legierung hergestellt. Gemäß weiterer erfindungsgemäßer Ausführungen kann der Wandbereich 21 jedoch auch als separater Bestandteil angesehen werden, der im Betriebszustand mit dem Gehäuse 3 verbunden ist. Durch den Hydraulikleitkanal 15 kommt es somit im Betrieb zu einer Hydraulikführung in radialer Richtung von außen über das Gehäuse 3 in die Eingangswelle 5 und von dort in axialer Richtung sowie in radialer Richtung zu dem Druckraum 25 hin.

In anderen Worten ausgedrückt, ist erfindungsgemäß eine Betätigung der K0 (Trennkupplung 8) über eine Dreheinführung (Drehdurchführung) umgesetzt. Durch den geschlossenen Kraftfluss wird auf ein Einrücklager verzichtet und das Rotorlager (Hauptlager 29) ist deutlich weniger belastet. Zudem ermöglicht dieses Betätigungssystem 11 das Gehäuse 3 des Hybridmoduls 1 einteilig, vorzugsweise aus Aluminium zu fertigen. Da die Drehdurchführung in die Eingangswelle 5 des Hybridmoduls 1 integriert ist, entstehen bei elektrischer Fahrt keine Verluste durch Reibung zwischen den Gleitdichtringen (Dichtring 34) und dem Gehäuse 3. Es besteht zudem die Möglichkeit auf einen Fliehölausgleich zu verzichten, da sich die Kupplung 8 bei stehender Verbrennungskraftmaschine nicht selbst schließen kann. Allerdings hat dann die durch die Drehzahl hervorgerufene Fliehkraft einen Einfluss auf die Kupplungskennlinie.

Ein Hybridmodul 1 (samt Trennkupplung 8) weist eine elektrische Maschine 4 mit einem Rotor 6 sowie eine erste Teilkupplung 12 und eine zweite Teilkupplung 13 einer Mehrfachkupplungsvorrichtung, insbesondere einer Doppelkupplungsvorrichtung, auf, mit denen Drehmoment vom Rotor 6 und/ oder von der Trennkupplung 8 auf einen Antriebsstrang 2 übertragbar ist. Die Trennkupplung 8, die erste Teilkupplung 12 und die zweite Teilkupplung 13 sind innerhalb des vom Rotor 6 umschlossenen Raumes angeordnet. Jeder Kupplung 8, 12, 13 ist jeweils ein Betätigungssystem zur Betätigung der jeweiligen Kupplung zugeordnet, wobei wenigstens zwei der Betätigungssysteme axial an einer Seite des Rotors 6 angeordnet sind. Die Trennkupplung 8 des Hybridmoduls 1 ist dabei zur mechanischen und lösbaren Ankopplung des Antriebsaggregats, welches insbesondere eine Verbrennungskraftmaschine sein kann, vorgesehen. Der vom Rotor 6 der elektrischen Maschine 4 umschlossene Raum ist im Wesentlichen ein zylinderförmiger Raum, der radial vom Rotor 6 begrenzt ist. Die Kupplungen 8, 12, 13 des Hybridmoduls 1 sind vorzugsweise Reibkupplungen, die gegebenenfalls Nachstelleinrichtungen zum Ausgleich des über die Lebensdauer auftretenden Verschleißes aufweisen. Die zur Betätigung der Kupplungen 8, 12, 13 eingesetzten Betätigungssysteme sind vorzugsweise elektrische oder hydraulische Systeme oder gegebenenfalls eine Kombination aus elektrischer und hydraulischer Funktion. In Fig. 1 ist ein möglicher Aufbau des Betätigungssystems 11 gezeigt. Der Rotorträger 7 der E-Maschine 4 ist über ein Rillenkugellager (Hauptlager 29) auf dem einteiligen Aluminiumgehäuse 3 gelagert. Unterhalb (radial innerhalb) dieses Lagers 29 befindet sich die Dreheinführung zwischen dem Gehäuse 3 und der Eingangswelle 5 des Hybridmoduls 1. Die Eingangswelle 5 selbst ist gegenüber dem Gehäuse 3 im Bereich der Dreheinführung über ein Rillenkugellager (Lager 23) in radialer und axialer Richtung gelagert. Die Welle 5 ist zudem mit zwei Nadellagern, welche sich innerhalb der Eingangswelle 5 befinden auf der inneren Getriebeeingangswelle 31a gelagert und somit in Richtung Getriebe radial geführt. Neben dem Rillenkugellager 23 der Eingangswelle 5 befindet sich ein Radialwellendichtring 34, der das Modul 1 abdichtet. Die Trennkupplung 8 ist oberhalb (radial außerhalb) des Rotorlagers 29 angeordnet, wobei sich die Betätigungseinrichtung 11 bestehend aus einem Druckraum 25 und einer Fliehölkammer 36 auf der Eingangswelle 5 neben dem Rotorlager 29 auf der Getriebeseite befindet. Die Trennkupplung 8 ist über einen Innenlamellenträger 37 drehfest mit der Eingangswelle 5 verbunden. Diese Verbindung ist als Steckverzahnung ausgeführt, kann aber auch durch andere form- oder stoffschlüssige Verbindungen realisiert werden. Die axiale Sicherung erfolgt hier über die Rückstellfedern 32 des Betätigungskolbens 16. Der Abtrieb der Trennkupplung 8 ist als Außenlamellenträger 38 realisiert, der mit dem Rotorträger 7 verbunden ist. Die axiale Sicherung des Rotorlagers 29 in Richtung Getriebe erfolgt über das Rillenkugellager 23, welches die Eingangswelle 5 in axialer Richtung (relativ zu dem Gehäuse 3) sichert. Hierfür sind auf der Getriebeseite des Rotorlagers 29 zwischen diesem und der Eingangswelle 5 ein Axiallager 39 (hier Axialnadellager) sowie ein Federelement 40 vorgesehen. Da die Eingangswelle 5 im Einbauzustand durch das Rillenkugellager 23 axial fixiert ist, erzeugt die Feder 40 stets eine Kraft, die das Rotorlager 29 in Richtung Gehäuse 3 drückt. Alternativ kann die Feder 40 auch am Rillenkugellager 23 der Eingangswelle 5 platziert werden (am Innendurchmesser links oder am Außendurchmesser rechts vom Lager 23). Als weitere Alternative kann das Rotorlager 29 fest im Gehäuse 3 verbaut werden.

### Bezugszeichenliste

- 1: Hybridmodul
- 2: Antriebsstrang
- 3: Gehäuse
- 4: elektrische Maschine
- 5: Eingangswelle
- 6: Rotor
- 7: Träger
- 8: Trennkupplung
- 9a: erstes Reibelement
- 9b: zweites Reibelement
- 10: Drehmomentübertragungsbereich
- 11: Betätigungseinrichtung
- 12: erste Teilkupplung
- 13: zweite Teilkupplung
- 14a: erster Kupplungsbestandteil der Trennkupplung
- 14b: erster Kupplungsbestandteil der ersten Teilkupplung
- 14c: erster Kupplungsbestandteil der zweiten Teilkupplung
- 15: Hydraulikleitkanal
- 16: Betätigungskolben
- 17: Betätigungszylinder
- 18: erster Abschnitt
- 19a: erstes Loch
- 19b: zweites Loch
- 20: zweiter Abschnitt
- 21: Wandbereich
- 22: Spalt
- 23: Lager
- 24: Druckgehäusebereich
- 25: Druckraum
- 26a: zweiter Kupplungsbestandteil der Trennkupplung
- 26b: zweiter Kupplungsbestandteil der ersten Teilkupplung
- 26c: zweiter Kupplungsbestandteil der zweiten Teilkupplung
- 27: Stator
- 28: Drehachse
- 29: Hauptlager
- 30: Drehschwingungsdämpfer
- 31a: erste Getriebeeingangswelle
- 31b: zweite Getriebeeingangswelle
- 32: Rückstellfeder
- 33: Ringnut
- 34: Dichtring
- 35: Stützbereich
- 36: Fliehölkammer
- 37: Innenlamellenträger
- 38: Außenlamellenträger
- 39: Axiallager
- 40: Federelement

## Patentansprüche

1. Hybridmodul (1) für einen Antriebsstrang (2) eines Kraftfahrzeuges, mit einem Gehäuse (3), einer in dem Gehäuse (3) aufgenommenen elektrischen Maschine (4), einer Eingangswelle (5), einem mit einem Rotor (6) der elektrischen Maschine (4) drehgekoppelten Träger (7), einer zwischen der Eingangswelle (5) und dem Träger (7) wirkend eingesetzten Trennkupplung (8), wobei die Trennkupplung (8) mit mehreren Reibelementen (9a, 9b) radial innerhalb eines mit dem Rotor (6) gekoppelten hülsenförmigen Drehmomentübertragungsbereiches (10) des Trägers (7) angeordnet ist, einer zum Ein- und Ausrücken der Trennkupplung (8) vorgesehenen hydraulischen Betätigungseinrichtung (11), sowie zwei Teilkupplungen (12, 13), welche Teilkupplungen (12, 13) jeweils mehrere radial innerhalb des Drehmomentübertragungsbereiches (10) des Trägers (7) angeordnete Reibelemente (9a, 9b) aufweisen und mit ihrem ersten Kupplungsbestandteil (14b, 14c) mit dem Träger (7) drehfest verbunden sind, **dadurch gekennzeichnet, dass** die Betätigungseinrichtung (11) einen Hydraulikleitkanal (15) aufweist, welcher Hydraulikleitkanal (15) mit einem innerhalb des Gehäuses (3) auf der Eingangswelle (5) aufgenommenen Betätigungskolben (16) hydraulisch gekoppelt ist und zumindest teilweise unter Ausbildung einer Drehdurchführung in die Eingangswelle (5) eingebracht ist.

2. Hybridmodul (1) nach Anspruch 1, **dadurch gekennzeichnet, dass** der Hydraulikleitkanal (15) sowie der Betätigungskolben (16) einem mit der Trennkupplung (8) zusammenwirkenden konzentrischen Betätigungszylinder (17) zugeordnet sind.

3. Hybridmodul (1) nach Anspruch 1 oder 2, **dadurch gekennzeichnet, dass** der Hydraulikleitkanal (15) in einem ersten Abschnitt (18) durch zumindest ein in die Eingangswelle (5) eingebrachtes Loch (19a, 19b) gebildet ist.

4. Hybridmodul (1) nach Anspruch 3, **dadurch gekennzeichnet, dass** der erste Abschnitt (18) ein in radialer Richtung verlaufendes erstes Loch (19a) sowie ein an das erste Loch (19a) anschließendes, in einem spitzen Winkel zu dem ersten Loch (19a) ausgerichtetes, zweites Loch (19b) aufweist.

5. Hybridmodul (1) nach einem der Ansprüche 1 bis 4, **dadurch gekennzeichnet, dass** der Hydraulikleitkanal (15) einen zweiten Abschnitt (20) aufweist, welcher zweite Abschnitt (20) in einem mit dem Gehäuse (3) verbundenen oder unmittelbar durch das Gehäuse (3) ausgebildeten Wandbereich (21) eingebracht ist.

6. Hybridmodul (1) nach einem der Ansprüche 3 bis 5, **dadurch gekennzeichnet, dass** die beiden Abschnitte (18, 20) des Hydraulikkanals (15) über einen radialen Spalt (22), axial versetzt zu einem die Eingangswelle (5) relativ zu dem Gehäuse (3) verdrehbar lagernden Lager (23), miteinander verbunden sind.

7. Hybridmodul (1) nach einem der Ansprüche 1 bis 6, **dadurch gekennzeichnet, dass** der Hydraulikleitkanal (15) in einen zwischen dem Betätigungskolben (16) und einem axial fest abgestützten Druckgehäusebereich (24) ausgebildeten Druckraum (25) einmündet.

8. Hybridmodul (1) nach einem der Ansprüche 1 bis 7, **dadurch gekennzeichnet, dass** die Reibelemente (9a, 9b) der Trennkupplung (8) zumindest teilweise in axialer Richtung überlappend zu dem Drehmomentübertragungsbereich (10) des Trägers (7) angeordnet sind.

9. Hybridmodul (1) nach einem der Ansprüche 1 bis 8, **dadurch gekennzeichnet, dass** die Reibelemente (9a, 9b) der jeweiligen Teilkupplung (12, 13) zumindest teilweise in axialer Richtung überlappend zu dem Drehmomentübertragungsbereich (10) des Trägers (7) angeordnet sind.

10. Antriebsstrang (2) für ein Kraftfahrzeug, mit einem Hybridmodul (1) nach zumindest einem der Ansprüche 1 bis 9.

## Claims

1. A hybrid module (1) for a drive train (2) of a motor vehicle, having a housing (3), an electric machine (4) received in the housing (3), an input shaft (5), a support (7) rotationally coupled to a rotor (6) of the electric machine (4), a separating clutch (8) operatively inserted between the input shaft (5) and the support (7), wherein the separating clutch (8) is arranged with multiple friction elements (9a, 9b) radially inside a sleeve-shaped torque transmission region (10) of the support (7) coupled to the rotor (6), a hydraulic actuation unit (11) provided for engaging and disengaging the separating clutch (8) and two partial clutches (12, 13), which partial clutches (12, 13) each have multiple friction elements (9a, 9b) arranged radially inside the torque transmission region (10) of the support (7) and are connected to the support (7) in a non-rotatable manner by their first clutch component (14b, 14c), **characterized in that** the actuation unit (11) has a hydraulic guide channel (15), which hydraulic guide channel (15) is hydraulically coupled to an actuation piston (16) received inside the housing (3) on the input shaft (5) and is at least partially introduced into the input shaft (5), forming a rotary union.

2. The hybrid module (1) according to claim 1, **characterized in that** the hydraulic guide channel (15) as well as the actuation piston (16) are associated with a concentric actuation cylinder (17) interacting with the separating clutch (8).

3. The hybrid module (1) according to claim 1 or 2, **characterized in that** the hydraulic guide channel (15) is formed in a first section (18) by at least one hole (19a, 19b) introduced in the input shaft (5).

4. The hybrid module (1) according to claim 3, **characterized in that** the first section (18) has a first hole (19a) extending in the radial direction and a second hole (19b) adjacent to the first hole (19a) and oriented at an acute angle to the first hole (19a).

5. The hybrid module (1) according to any one of claims 1 to 4, **characterized in that** the hydraulic guide channel (15) has a second section (20), which second section (20) is introduced in a wall region (21) connected to the housing (3) or formed directly by the housing (3).

6. The hybrid module (1) according to any one of claims 3 to 5, **characterized in that** the two sections (18, 20) of the hydraulic channel (15) are connected to one another via a radial gap (22), axially offset with respect to a bearing (23) which rotatably supports the input shaft (5) relative to the housing (3).

7. The hybrid module (1) according to any one of claims 1 to 6, **characterized in that** the hydraulic guide channel (15) opens into a pressure chamber (25) formed between the actuation piston (16) and an axially fixedly supported pressure housing region (24).

8. The hybrid module (1) according to any one of claims 1 to 7, **characterized in that** the friction elements (9a, 9b) of the separating clutch (8) are arranged at least partially overlapping in the axial direction with respect to the torque transmission region (10) of the support (7).

9. The hybrid module (1) according to any one of claims 1 to 8, **characterized in that** the friction elements (9a, 9b) of the respective partial clutch (12, 13) are arranged at least partially overlapping in the axial direction with respect to the torque transmission region (10) of the support (7).

10. A drive train (2) for a motor vehicle, having a hybrid module (1) according to at least one of claims 1 to 9.

## Revendications

1. Module hybride (1) pour une chaîne cinématique (2) d'un véhicule automobile, comprenant un carter (3), une machine électrique (4) logée dans le carter (3), un arbre d'entrée (5), un support (7) couplé en rotation à un rotor (6) de la machine électrique (4), un embrayage de coupure (8) monté de manière à être actif entre l'arbre d'entrée (5) et le support (7), l'embrayage de coupure (8) avec plusieurs éléments de friction (9a, 9b) étant disposé radialement à l'intérieur d'une zone de transfert de couple (10) du support (7) en forme de manchon couplée au rotor (6), un dispositif d'actionnement hydraulique (11) destiné à embrayer et à débrayer l'embrayage de coupure (8), ainsi que deux embrayages individuels (12, 13), lesdits embrayages individuels (12, 13) comportant respectivement plusieurs éléments de friction (9a, 9b) disposés radialement à l'intérieur de la zone de transfert de couple (10) du support (7) et étant accouplés solidaires en rotation au moyen de leur premier composant d'embrayage (14b, 14c) au support (7), **caractérisé en ce que** le dispositif d'actionnement (11) présente un canal de guidage hydraulique (15), ledit canal de guidage hydraulique (15) est accouplé hydrauliquement à un piston d'actionnement (16) logé à l'intérieur du carter (3) sur l'arbre d'entrée (5) et est inséré au moins partiellement dans l'arbre d'entrée (5) afin de former un raccord rotatif.

2. Module hybride (1) selon la revendication 1, **caractérisé en ce que** le canal de guidage hydraulique (15) ainsi que le piston d'actionnement (16) sont associés à un cylindre d'actionnement (17) concentrique coopérant avec l'embrayage de coupure (8).

3. Module hybride (1) selon la revendication 1 ou 2, **caractérisé en ce que** le canal de guidage hydraulique (15) est formé dans une première section (18) par au moins un orifice (19a, 19b) pratiqué dans l'arbre d'entrée (5).

4. Module hybride (1) selon la revendication 3, **caractérisé en ce que** la première section (18) comporte un premier orifice (19a) s'étendant dans la direction radiale ainsi qu'un second orifice (19b) se raccordant au premier orifice (19a) et orienté selon un angle aigu par rapport au premier orifice (19a).

5. Module hybride (1) selon l'une quelconque des revendications 1 à 4, **caractérisé en ce que** le canal de guidage hydraulique (15) comporte une seconde section (20), ladite seconde section (20) est insérée dans une zone de paroi (21) formée directement par le carter (3) ou reliée au carter (3).

6. Module hybride (1) selon l'une quelconque des revendications 3 à 5, **caractérisé en ce que** les deux sections (18, 20) du canal de guidage hydraulique (15) sont reliées ensemble par une fente radiale (22), décalée axialement par rapport à un palier (23) supportant l'arbre d'entrée (5) pour lui permettre de tourner par rapport au carter (3).

7. Module hybride (1) selon l'une quelconque des revendications 1 à 6, **caractérisé en ce que** le canal de guidage hydraulique (15) débouche dans une chambre de refoulement (25) formée entre le piston d'actionnement (16) et une zone de corps de refoulement (24) qui prend appui axialement.

8. Module hybride (1) selon l'une quelconque des revendications 1 à 7, **caractérisé en ce que** les éléments de friction (9a, 9b) de l'embrayage de coupure (8) sont disposés au moins partiellement dans la direction axiale de manière à recouvrir la zone de transfert de couple (10) du support (7).

9. Module hybride (1) selon l'une quelconque des revendications 1 à 8, **caractérisé en ce que** les éléments de friction (9a, 9b) de l'embrayage individuel (12, 13) respectif sont disposés au moins partiellement dans la direction axiale de manière à recouvrir la zone de transfert de couple (10) du support (7).

10. Chaîne cinématique (2) pour un véhicule automobile, comprenant un module hybride (1) selon au moins l'une quelconque des revendications 1 à 9.
